# EUROPÄISCHE PATENTSCHRIFT

(11) **EP 1 930 450 B1**
(45) Veröffentlichungstag und Bekanntmachung des Hinweises auf die Patenterteilung: **13.07.2011**
(21) Anmeldenummer: 07024980.0
(22) Anmeldetag: 15.12.2004
(51) Int. Cl.: C21D 7/06, B24C 1/10, F01D 5/30

(54) **Bauteil mit Druckeigenspannung**
Component with residual compressive stress
Composant doté d'une contrainte de compression

(30) Priorität: 15.01.2004 EP 04000775
(43) Veröffentlichungstag der Anmeldung: 11.06.2008
(62) Teilanmeldung aus: 04803917.6
(73) Patentinhaber: SIEMENS AKTIENGESELLSCHAFT, 80333 München (DE)
(72) Erfinder: David, Walter, 45481 Mülheim an der Ruhr (DE)

(56) Entgegenhaltungen:
- US-A- 5 492 447

## Beschreibung

Die Erfindung betrifft ein Bauteil mit Druckeigenspannungen gemäß des Oberbegriffs des Anspruch 1.

In mechanisch hoch beanspruchten Bauteilen werden oft Druckeigenspannungen eingebracht, damit die Bauteile erhöhte Spannungen ertragen können. Teilweise wird dies bei den tannenbaumähnlich ausgeformten Füßen von Schaufeln von Turbinen (Dampfturbinen, Gasturbinen) durchgeführt.

Druckeigenspannungen können durch Rollieren eingebracht werden.
Eine andere Möglichkeit zur Erzeugung von Druckeigenspannungen stellt das Kugeldruckstrahlen dar.
Die US-PS 5,911,780 zeigt eine solche Methode zur Erzeugung von Druckeigenspannungen.

Die US-PS 5,492,447 offenbart ein Verfahren zum Erzeugen von Druckeigenspannungen in Rotorkomponenten mittels eines Lasers.

Ein ähnliches Verfahren ist in der EP 731 184 B1 offenbart.

Die WO 01/15866 A1 zeigt ein Verfahren zur Oberflächenbehandlung eines Bauteils, bei dem zumindest ein Strahlparameter bei einem abrasiven Strahlungsverfahren an die Konturlinie des Bauteils angepasst wird.

Die DE 197 42 137 A1 zeigt eine Walzvorrichtung zur Erzeugung von Druckeigenspannungen.

Die US 4,428,213 offenbart ein Bauteil, bei dem ein erster Bereich und anschließend das gesamte Bauteil mit einer geringeren Intensität kugelgestrahlt werden.

Die EP 0 230 165 A1 und die EP 1 125 695 A2 offenbaren einen Roboter, der ein Werkzeug gegenüber einem zu bearbeitenden Bauteil führt.

Die US 4,937,421 offenbart eine Laserbestrahlungsmethode und eine dazugehörige Vorrichtung, wobei der Laserstrahl eines Lasers in zwei Strahlen aufgeteilt wird, um so eine größere Bestrahlungsfläche auf den zu bearbeitenden Bauteil zu erzeugen, damit eine schnellere Bearbeitungszeit erzielt wird. Diese zwei Laserstrahlen werden gemeinsam geführt und weisen bezüglich Auftreffwinkel, Intensität die gleichen Parameter auf und werden in einer Halterung gemeinsam geführt.

Bauteile nach dem Stand der Technik zeigen für die gewünschten Anforderungen an die lokal unterschiedlichen Betriebsspannungen keine ausreichende Festigkeit für außergewöhnliche Betriebszustände.

Es ist daher Aufgabe der Erfindung, dieses Problem zu überwinden.

Die Aufgabe wird gelöst durch ein Bauteil gemäß des Anspruchs 1.

In den Unteransprüchen sind weitere vorteilhafte Maßnahmen aufgelistet.
Die in den Unteransprüchen aufgelisteten Maßnahmen können in vorteilhafter Art und Weise miteinander kombiniert werden.

Es zeigen
- Figur 1, 2: ein Bauteil, das eine gekrümmte Oberfläche aufweist,
- Figur 3: eine schematische Anordnung einer Vorrichtung, mit der das erfindungsgemäße Verfahren durchzuführen ist,
- Figur 4, 18, 19: den lateralen Verlauf (schematisch) der Druckeigenspannungen,
- Figuren 5 bis 13, 20, 21: verschiedene Verfahrensabläufe des erfindungsgemäßen Verfahrens,
- Figur 15: eine Turbinenschaufel,

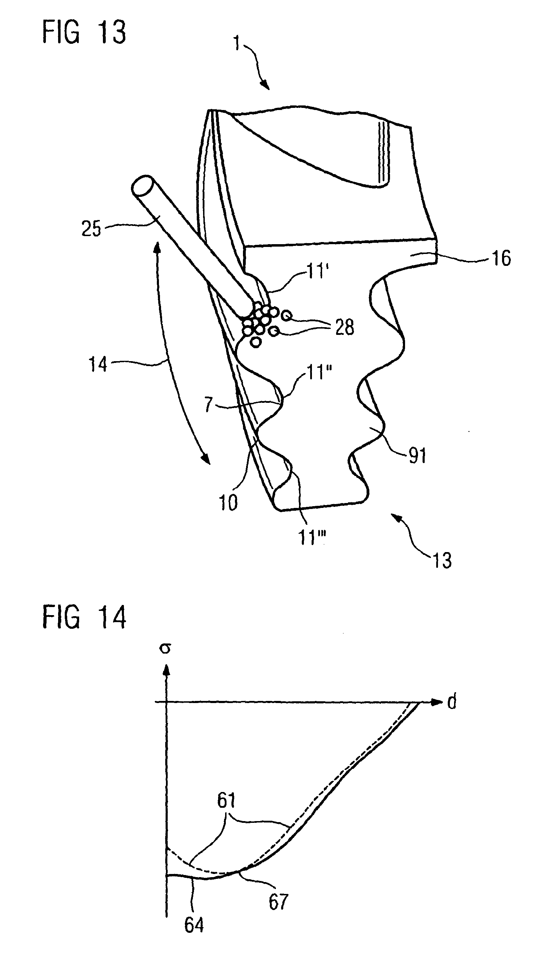

- Figur 14: einen Druckspannungsverlauf aufgetragen über der Tiefe eines Bauteils

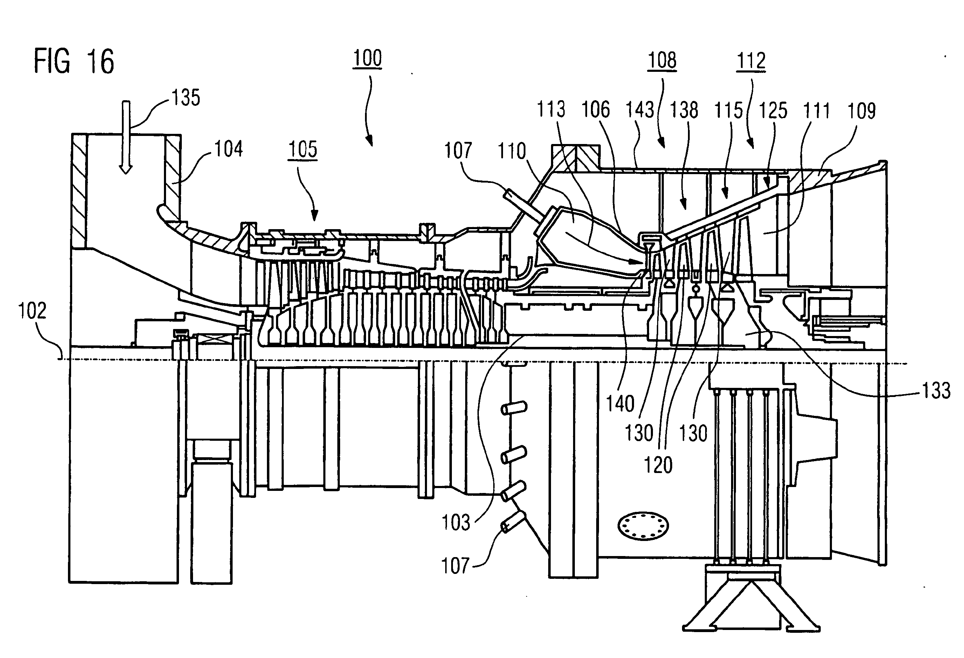

- Figur 16: eine Gasturbine,

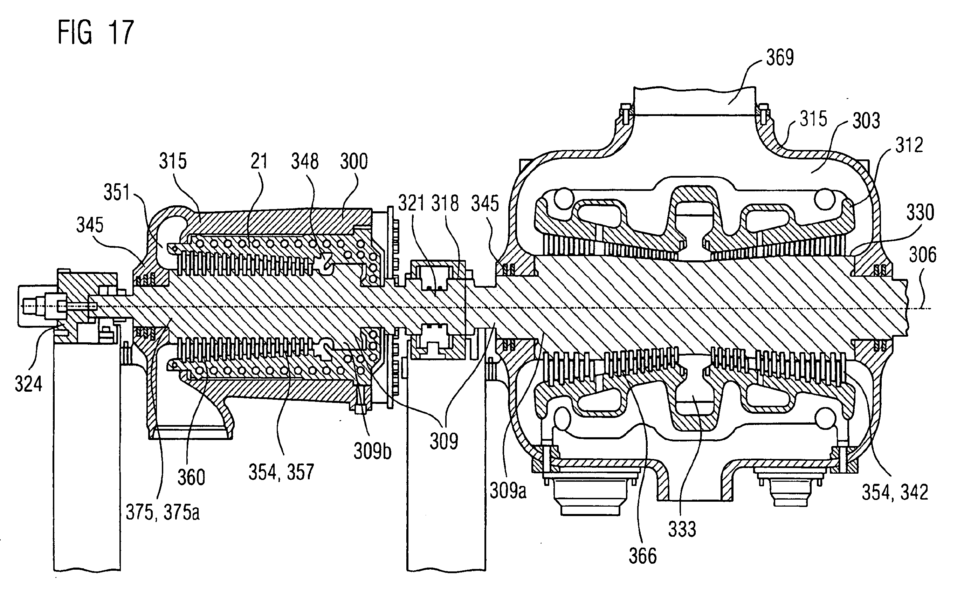

- Figur 17: eine Dampfturbine.

### Das Bauteil

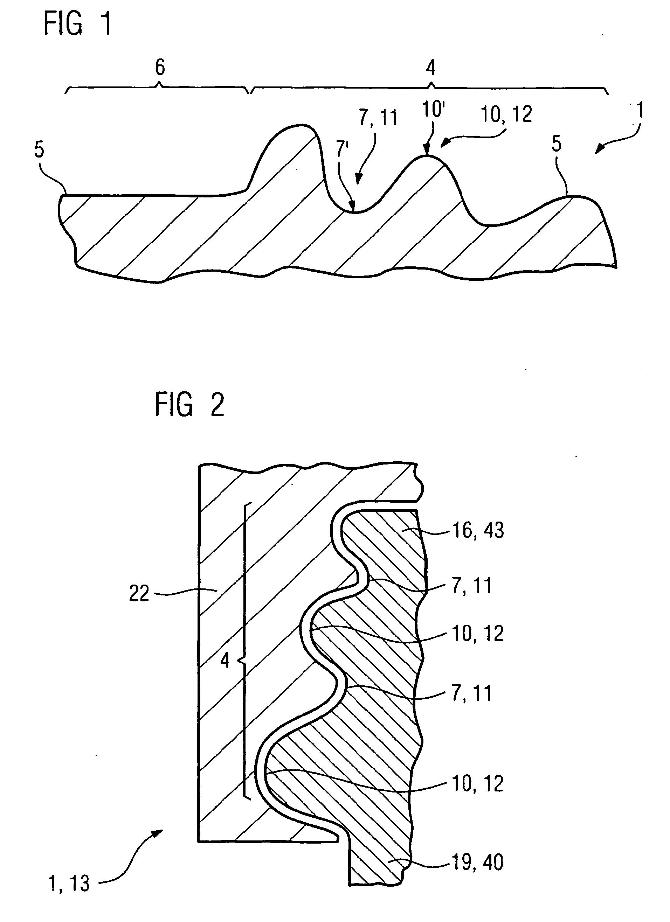

Figur 1 zeigt ein Bauteil 1 mit einer Oberfläche 5.
Das Bauteil 1 kann ein Bauteil einer Dampfturbine (Fig. 17) oder einer Gasturbine sein, wie z.B. eine Flugzeugturbine oder eine Turbine zur Stromerzeugung 100 (Fig. 16).
Solche Bauteile sind beispielsweise Turbinenschaufeln 120, 130, 342, 354, eine Brennkammerauskleidung oder andere Gehäuseteile.

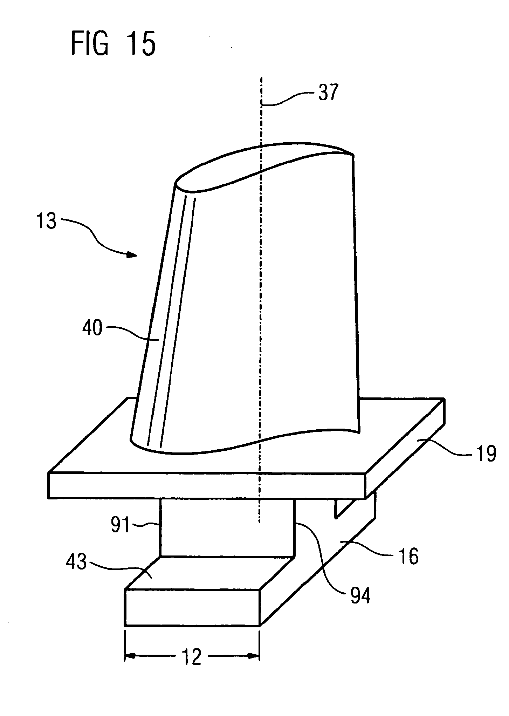

Die Oberfläche 5 des Bauteils 1, 120, 130, 342, 354 setzt sich beispielsweise aus mehreren, hier zwei Oberflächenbereichen 4, 6 zusammen.
Ein Oberflächenbereich 6 (beispielsweise Schaufelblattbereich 40, Fig. 15) ist beispielsweise eben oder nur einfach gekrümmt ausgeführt, wohingegen der Oberflächenbereich 4 mehrfach gekrümmt ist.
In der Oberfläche 5 und seinen Oberflächenbereichen 4 und/oder 6 sind unterschiedliche und von Null verschiedene Druckeigenspannungen σ_{E} vorhanden.
Das Bauteil 1, 120, 130, 342, 354 weist einen konkav gekrümmten Bereich 7 des Oberflächenbereichs 4 auf, der beispielsweise während des Einsatzes des Bauteils 1, 120, 130, 342, 354 höheren mechanischen Spannungen ausgesetzt ist als ein anderer, konvex gekrümmter Bereich 10 des Oberflächenbereichs 4.

Der Oberflächenbereich 4 des Bauteils 1, 120, 130, 342, 354 weist zumindest teilweise konkav 7 (ein Tal 11) und konvex 10 gekrümmte Bereiche (Bergkuppe 12) auf, so dass es lokale Maxima 10' und lokale Minima 7' gibt. Ein konvex gekrümmter Bereich 10, 12 schließt sich beispielsweise an den konkav gekrümmten Bereich 7, 11 an.

In dem konkav gekrümmten Bereich 7, 11 liegt beispielsweise eine äußere höhere mechanische Spannung an als in dem konvex gekrümmten Bereich 10, 12, wenn das Bauteil 1, 120, 130, 342, 354 eingebaut ist.

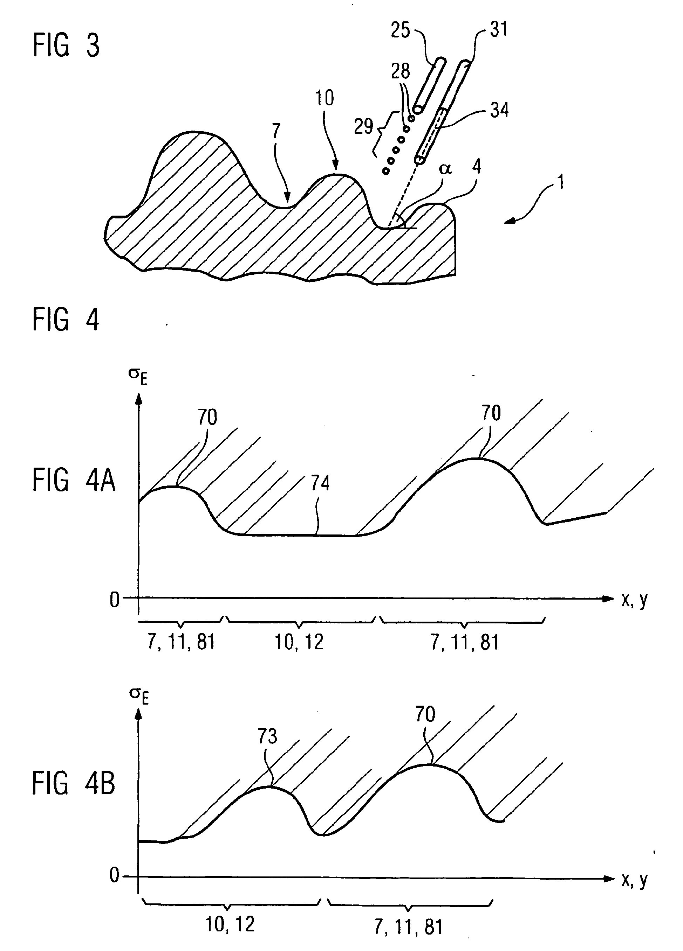

In dem Oberflächenbereich 4 können durch Oberflächenbehandlungsverfahren Druckeigenspannungen σ_{E} eingebracht werden. Dies geschieht mittels passender Druckerzeuger 25 (Fig. 3), beispielsweise durch Rollieren, Kugelstrahlen oder Laserstrahlen.

Figur 2 zeigt beispielhaft als eingebautes Bauteil 1 einen Teilbereich einer Turbinenschaufel 13 (Fig. 15), nämlich einen Schaufelfuß 43 (Fig. 15) in seinem Befestigungsbereich 16 (Fig. 15) mit seiner tannenbaumähnlichen oder schwalbenschwanzartigen Struktur als mehrfach gekrümmter Oberflächenbereich 4.
Der Schaufelfuß 43 ist beispielsweise in einer entsprechend ausgeformten Scheibe 22 angeordnet und wird dort gehalten. Die Scheibe 22 ist wiederum auf einer Welle 103 einer Gasturbine 100 (Fig. 16) oder Dampfturbine (Fig. 17) angeordnet. Insbesondere in dem konkav gekrümmten Bereich 7, 11 treten hohe mechanische Belastungen auf.
Daher besteht der Bedarf, das Bauteil 1 in diesen Bereichen lokal so zu beeinflussen, dass höhere Zugspannungen ertragen werden können indem die örtlichen Zugspannungen teilweise kompensiert werden. Dies muss jedoch kontrolliert und in Abhängigkeit von der Geometrie gezielt mit örtlich unterschiedlichen Druckeigenspannungen σ_{E} erfolgen.
Die Turbinenschaufel 13 kann auch an der Welle 103 befestigt sein.

Figur 3 zeigt schematisch wie ein Druckerzeuger 25 und Bauteil 1, 120, 130, 342, 354 gegeneinander verfahren werden. Erfindungsgemäß werden Druckeigenspannungen σ_{E} in dem Bauteil 1, 120, 130, 342, 354 ausgehend von dem Oberflächenbereich 4 bis in die Tiefe des Bauteils 1, 120, 130, 342, 354 hinein erzeugt.
Dies kann insbesondere durch Rollieren, Laserbestrahlung oder Kugelbestrahlung erfolgen.
Beispielhaft wird das Verfahren anhand der Kugelbestrahlung näher erläutert. Die grundsätzliche Vorgehensweise, die Auswahl der Parameter ist auf die Laserbestrahlung, das Anrollieren oder andere Verfahren zur Erzeugung von Druckeigenspannungen analog zu übertragen. (Ein mechanischer Impuls der Kugeln entspricht einer Leistungsdichte eines Lasers oder einem Anpressdruck eines Rollierers).

Eine Kugelstrahldüse 25 als Druckerzeuger strahlt Strahlmittel 28 (Kugel) mit einer gewissen Geschwindigkeit aus, die einen Teilchenstrahl 29, insbesondere einen Kugelstrahl 29, bilden. Die Kugeln 28, insbesondere Stahlkugeln, treffen auf den Oberflächenbereich 4 des Bauteils 1 auf und generieren durch ihren mechanischen Impuls einen Strahldruck auf dem Oberflächenbereich 4, so dass dort Druckeigenspannungen σ_{E} erzeugt werden.
Die Kugelstrahldüse 25 kann über Laserstrahlen 34 eines Lasers 31 so gesteuert werden, dass sie exakt im vordefinierten Bereich auch entlang von gekrümmten Konturen geführt wird.
Insbesondere der Abstand, der Auftreffwinkel α, d.h. der Winkel der Kugelstrahldüse 25 zu der Oberfläche 5 in dem Oberflächenbereich 4, 6 kann angepasst werden. Der Auftreffwinkel α ist beispielsweise kleiner als 90° und liegt insbesondere zwischen 80° und 85°.

Ebenso kann der Strahldruck des Kugelstrahls 29 bei der Kugelstrahldüse 25 eingestellt werden.
Weitere Parameter sind die Größe des Strahlmittels 28, das Material des Strahlmittels 28 oder die Form der Düsenöffnung (Laser: Strahlform; Anrollieren: Form des Werkzeugs).

Das Bauteil 1 ist beispielsweise fest eingespannt, wobei beispielsweise in einem ersten Verfahrensschritt der Laser 31 mit seinen Laserstrahlen 34 den Oberflächenbereich 4 des Bauteils 1 CNC gesteuert abtastet. Dabei wird entweder das Bauteil 1 auf einer CNC-Maschine montiert und gegenüber dem Laser 31 verfahren oder umgekehrt.
Durch das Abfahren des Oberflächenbereichs 4 des Bauteils 1 wird die exakte Geometrie des Bauteils 1 erfasst. Durch Vorgabe von bestimmten Bereichen (beispielsweise die konkav gekrümmten Bereiche 7) werden Bereiche festgelegt, die mit der Kugelstrahldüse 25 behandelt werden. Ebenso kann nach dem Erfassen des Oberflächenbereichs 4 beispielsweise automatisch eine Berechnung erfolgen, die festlegt, welche Bereiche besonders hohen mechanischen Belastungen ausgesetzt sind und dann dementsprechend die Ausdehnung und Höhe der Druckeigenspannungen σ_{E} festlegt werden, die mittels Kugelstrahlen 29 erzeugt werden sollen.
Durch die Höhe der Druckeinspannungen σ_{E}, die erzeugt werden soll, werden auch die Parameter der Kugelstrahldüse 25 bezogen auf die zu bestrahlenden konkaven oder konvexen Bereiche 7, 10 festgelegt.
Es handelt sich dabei also um eine Methode, bei der der Oberflächenbereich 4 in einem Prozess lokal gezielt mit unterschiedlichen Parametern behandelt wird, so dass nach Durchführung des Verfahrens auf der gesamten Oberfläche lokal vordefinierte, jedoch unterschiedliche Druckeigenspannungen σ_{E} vorliegen.

Der gesamte Oberflächenbereich 4, auf der Druckeigenspannungen σ_{E} vorhanden sind, entspricht beispielsweise der Oberfläche eines tannenbaumähnlichen Schaufelfußes 43 der Turbinenschaufel 13, 120, 130, 342, 354.
Lokal unterschiedlich bedeutet in diesem Fall, dass Bereiche erzeugt werden, die hohe und niedrigere und von null verschiedene Druckeigenspannungen σ_{E} nach dem Durchführen des Verfahrens aufweisen.

So werden insbesondere in den konkav gekrümmten Bereichen 7, 11 hohe Druckeigenspannungen σ_{E} erzeugt, wohingegen in den übrigen konvex gekrümmten Bereichen 10, 12 geringere Druckeigenspannungen σ_{E} erzeugt werden. Insbesondere bleibt keine gekrümmte Fläche 7, 10 unbehandelt, so dass zumindest ein konvex gekrümmter Bereich 10 und ein konkav gekrümmter Bereich 7 in ihrem gesamten Oberflächenbereich Druckeigenspannungen σ_{E} aufweisen.
Die Steuerung des Kugelstrahles 29 erfolgt durch den Laser 31 und beispielsweise durch eine CNC-Maschine, die den Kugelstrahl 29 gegenüber dem Bauteil 1 bewegt, um verschiedene Bereiche 7, 10 bestrahlen zu lassen.

Figur 4 a) zeigt eine beispielhafte Verteilung der Druckeigenspannungen σ_{E} in einer x-y-Ebene.
In dem konkav gekrümmten Bereich 7, 11, der die höheren Druckeigenspannungen σ_{E} aufweist, ist ein Maximum 70 in der Druckeigenspannung σ_{E} innerhalb der x-y-Ebene vorhanden.
Der konvex gekrümmte Bereich 10, 12 weist ein Plateau 74 niedrigerer Druckeigenspannungen σ_{E} auf.
Jedoch ist das Maximum 70 und alle Werte des Bereichs 7, 11 höher als der Wert des Plateaus 74.
Lokal unterschiedliche Druckeigenspannungen bedeutet daher, dass die Druckeigenspannungen σ_{E} in dem konkav gekrümmten Bereich 7, 11 höher sind als in dem Plateau 74 in dem konvex gekrümmten Bereich 10, 12 mit den niedrigeren Druckeigenspannungen σ_{E} .

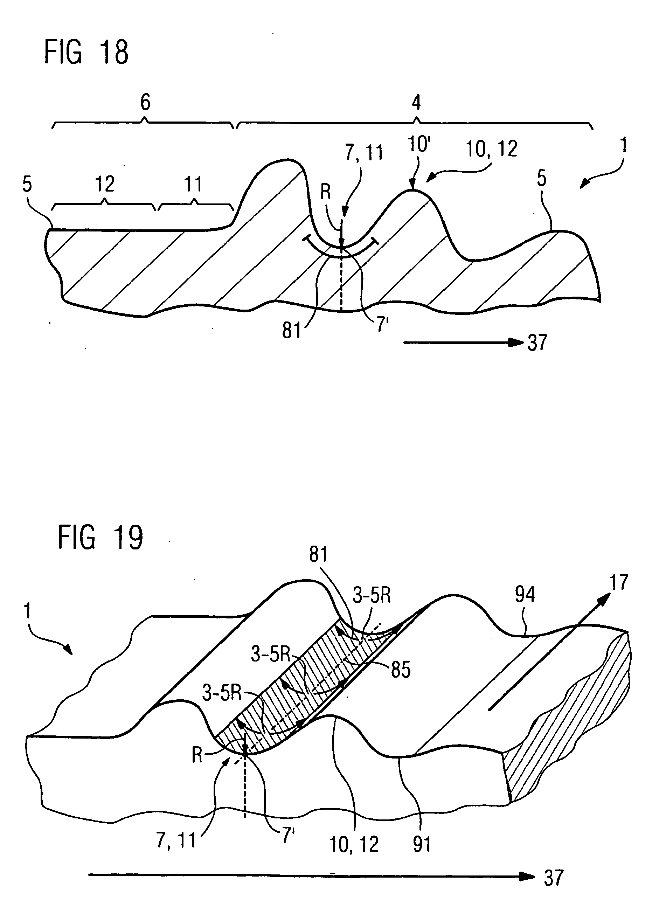

Figur 4 b) zeigt eine weitere beispielhafte Verteilung der Druckeigenspannungen σ_{E} in einer x-y-Ebene.
In dem konkav gekrümmten Bereich 7, 11, der die höheren Druckeigenspannungen σ_{E} aufweist, ist ein Maximum 70 in der Druckeigenspannung σ_{E} innerhalb der x-y-Ebene vorhanden.
Der konvex gekrümmte Bereich 10, 12 weist ein Maximum 73 niedrigerer Druckeigenspannungen σ_{E} auf.
Jedoch ist das Maximum 70 höher als das Maximum 73.
Lokal unterschiedliche Druckeigenspannungen bedeutet daher, dass das Maximum 70 in der Druckeigenspannung σ_{E} in dem Bereich 7, 11 höher ist als das Maximum 73 in dem konvex gekrümmten Bereich 10, 12 mit den niedrigeren Druckeigenspannungen σ_{E} .
Zwar weist der konkav gekrümmte Bereich 7, 11, wie in Figur 4b) auch ersichtlich, stellenweise niedrigere Druckeigenspannungen σ_{E} auf als der konvex gekrümmte Bereich 10, 12, insbesondere in dem Übergangsbereich zwischen dem konkav gekrümmten Bereich 7, 10, jedoch bedeutet das, dass nicht ein punktueller Vergleich von Druckeigenspannungen σ_{E} herangezogen werden darf, um die Bereiche mit höheren Druckeigenspannungen σ_{E} und niedrigeren Druckeigenspannungen σ_{E} zu definieren, sondern die Höhe der Maxima 70, 73 zu Grunde zu legen ist. Figur 18 zeigt ein erfindungsgemäßes Bauteil 1.

Der konkav gekrümmte Bereich 7 weist ein Minimum 7' auf, das einen bestimmten Krümmungsradius R aufweist.
Der Krümmungsradius R wird im Punkt des Minimums 7' in bekannter Art und Weise bestimmt.
Eine Breite 81 des konkav gekrümmten Bereichs 7, 11, in dem die höheren Druckeigenspannungen σ_{E}, vorhanden sind, beträgt mindestens das 3 - 5 fache des Krümmungsradius R und ist insbesondere mittig um das Minimum 7' angeordnet.
An den konkav gekrümmten Bereich 7, 11 mit der Breite 81 schließt sich in Richtung der Längsachse 37 zumindest ein konvex gekrümmter Bereich 10, 12 mit den niedrigeren Druckeigenspannungen σ_{E} an.

Die Höhe der Druckeigenspannungen σ_{E} in dem konkav gekrümmten Bereich 7 kann auch mit einer Streckgrenze Rₚ des Materials des Bauteils 1, 120, 130, 342 ,354 korreliert werden.

Beispielsweise kann die Streckgrenze Rₚ 0,2 verwendet werden, wobei beispielsweise die Druckeigenspannung σ_{E} mindestens 30%, insbesondere mindestens 50% der Streckgrenze Rₚ 0,2 beträgt.

Die Bauteil 1 bzw. der Schaufelfuß 43 der Turbinenschaufel 13, 120, 130, 342, 354 erstreckt sich in einer Richtung 17 beispielsweise von einem Ende 91 zu dem anderen Ende 94 (Fig. 19) senkrecht zur Längsachse 37.
Der konkav gekrümmte Bereich 7, 11 ist eine gekrümmte Fläche mit der Breite 3 bis 5 mal R (=81), um eine Linie 85, die die Minima 7' in Richtung 17 miteinander verbindet. In Richtung 17 erstreckt sich der konkav gekrümmte Bereich 7, 11 über die Breite des Bauteils 1, 120, 130, also von dem Ende 91 zu dem Ende 94. Die Breite 81 ist die Länge des gekrümmten Konturverlaufs um das Minimum 7'.

### Verfahren

Wird nur eine einzige Kugelstrahldüse 25 verwendet, so können zuerst nur hohe Druckeigenspannungen σ_{E} und dann niedrige Druckeigenspannungen σ_{E} erzeugt werden oder umgekehrt.

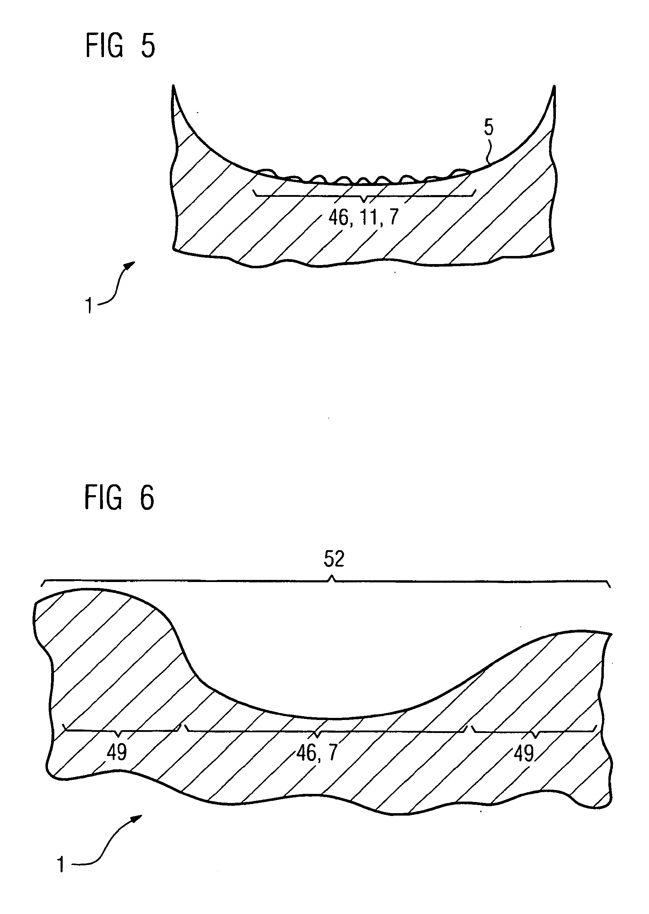

Figur 5 zeigt einen Teilbereich der Oberfläche 5 eines Bauteils 1, 13, 120, 130, 342, 354.

In einem ersten Verfahrensschritt erfolgt eine Kugelstrahlung eines konkav gekrümmten Bereichs 46 mit hohem Strahldruck. In einem weiteren Verfahrensschritt werden andere, benachbarte Bereich 49 behandelt, bei denen eine Kugelbestrahlung mit geringerem Strahldruck erfolgt (Fig. 6).

Das Verfahren kann angewendet werden bei neu hergestellten Bauteilen 1, 120, 130, 342, 354 sowie bei wieder aufgearbeiteten Bauteilen 1, 120, 130, 342, 354.

Wiederaufarbeitung bedeutet, dass Bauteile 1 nach ihrem Einsatz gegebenenfalls von Schichten befreit werden oder auf Risse untersucht werden, wobei die gegebenenfalls repariert werden. Druckeigenspannungen σ_{E} werden dann wieder neu erzeugt.

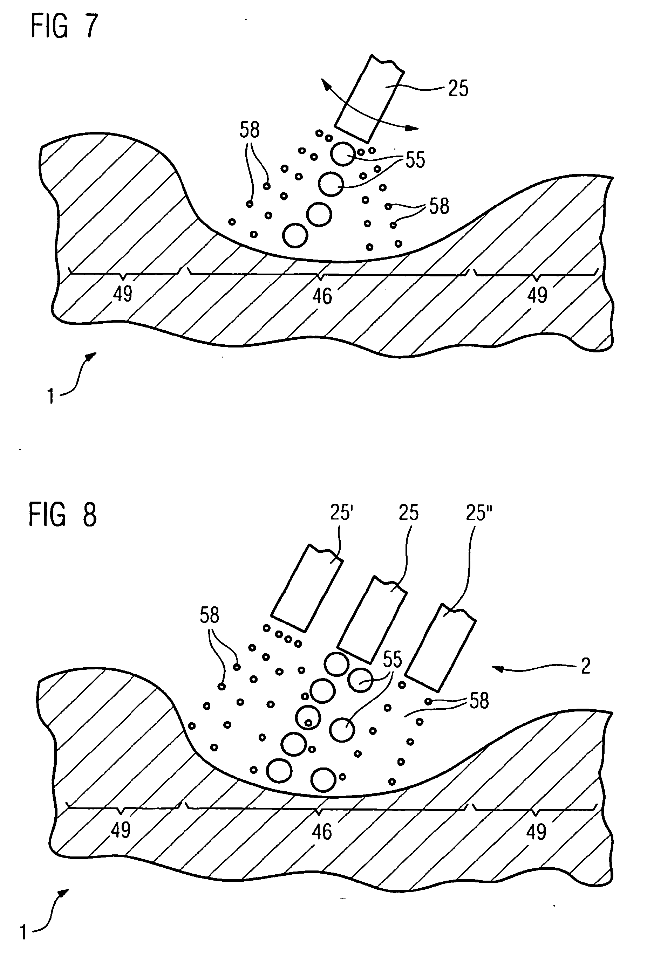

Figur 7 zeigt eine Vorrichtung mit der das Verfahren durchzuführen ist.

Bei dieser Vorrichtung wird nur eine Kugelstrahldüse 25 verwendet.

In einem ersten Schritt wird im Bereich 46 (konkav gekrümmter Bereich) ein hoher Strahldruck eingebracht.
Durch Bewegung (siehe Pfeil) der Kugelstrahldüse 25 oder des Bauteils 1, beispielsweise durch Variation des Auftreffwinkels, wird dann ein Kugelstrahl 29 auf die Bereiche 49 (konkav gekrümmter Bereich) gelenkt, in denen geringere Strahldrücke erzeugt werden sollen.
Dies kann dadurch erreicht werden, dass die Kugeln 28, die im Bereich 46 verwendet wurden, geringere Geschwindigkeiten und damit geringere mechanische Impulse erfahren oder dass die Kugelstrahldüse 25 Kugeln 28 kleineren Durchmessers 58 in die Bereiche 49 abstrahlt.

Wenn die Kugeln 28 einen kleinen Durchmesser aufweisen, so können verschiedene Strahldrücke erzeugt werden, indem beispielsweise die Materialien der Kugeln verschieden hart sind. So kann für hartes Material beispielsweise keramisches Material und als weiches Material metallisches Material verwendet werden.

Große Kugeln 55 erzeugen bei gleicher Geschwindigkeit gegenüber kleineren Kugeln 58 einen größeren Strahldruck.

Ebenso ist es möglich, kleine keramische Kugeln und große metallische Kugeln zu verwenden.
Weitere Kombinationsmöglichkeiten von verschiedenen Materialien, Durchmessern und Form der Kugeln sind denkbar, beispielsweise um eine abrasive Wirkung oder Verminderung der Rauhigkeit bzw. Glättung zu erzielen.

Wenn mehrere Kugelstrahldüsen 25, 25', 25'', 25''', 25"" verwendet werden, so können diese
a) einzeln oder gepaart zeitlich nacheinander oder
b) gleichzeitig betrieben werden.

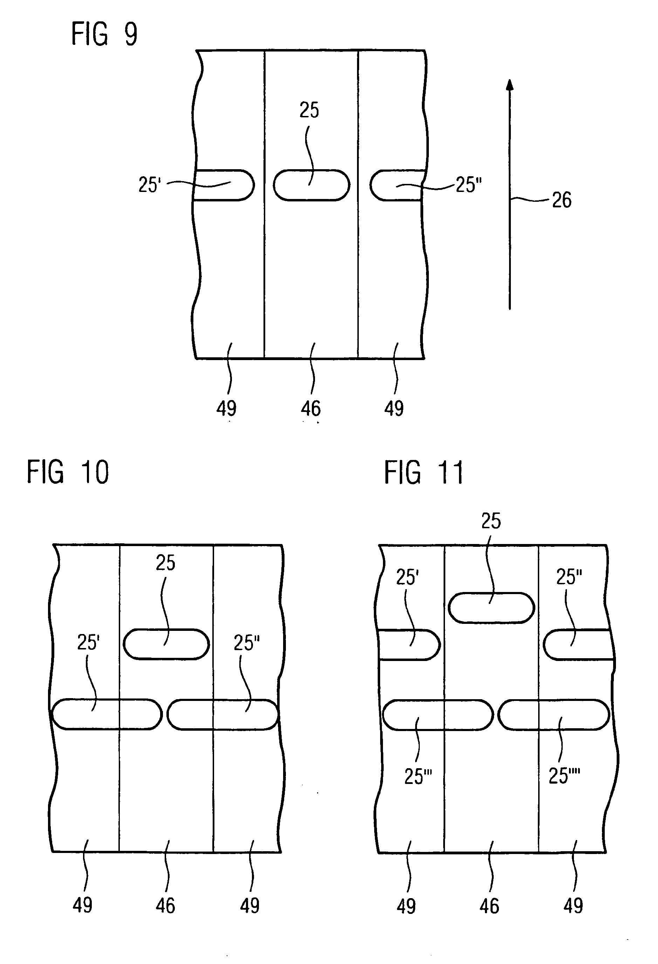

Wenn die Kugelstrahldüsen 25, 25', 25" , 25" ', 25" " gleichzeitig betrieben werden, so können die Kugelstrahldüsen 25, 25', 25 ", 25 " ', 25 " " örtlich auf gleicher Höhe sein (Fig. 9) oder gegeneinander versetzt sein, d.h. eine oder mehrere Kugelstrahldüsen sind vorlaufend und die andere oder anderen nachlaufend (Fig. 10, 11).

Figur 8 zeigt eine Vorrichtung 2 mit der das Verfahren durchzuführen ist.
Bei dieser Vorrichtung 2 werden beispielsweise mehrere, zumindest zwei, hier drei Kugelstrahldüsen 25, 25', 25" verwendet.

So kann z.B. zuerst die Kugelstrahldüse 25 verwendet werden, um den Bereich 46 (konkav gekrümmter Bereich) mit hohem Strahldruck zu beaufschlagen.

In einem zweiten Schritt werden nur die anderen Kugelstrahldüsen 25', 25 " benutzt, um die Bereiche 49 (konkav gekrümmter Bereich) mit geringeren Strahldrücken zu beaufschlagen (beispielsweise zur Glättung).

Ebenso können die in Figur 8 gezeigten beispielhaft gezeigten drei Kugelstrahldüsen 25, 25', 25 " gleichzeitig betrieben werden (zur Druckeigenspannungserzeugung und Glättung).

Dabei können eine oder zwei Kugelstrahldüsen 25', 25 ", die beispielsweise geringere Strahldrücke erzeugen, ebenfalls in den Bereich 46 (bestrahlen also einen Bereich 52, Fig. 6) hineinstrahlen (Fig. 10, 11).

Dabei erzeugt eine Kugelstrahldüse 25 einen hohen Strahldruck und bestrahlt den konkav gekrümmten Bereich 46 und die zweite oder weitere Kugelstrahldüse 25', 25'' erzeugt einen geringeren Strahldruck als die Kugelstrahldüse 25 auf und bestrahlen zumindest den konvex gekrümmten Bereich 49.

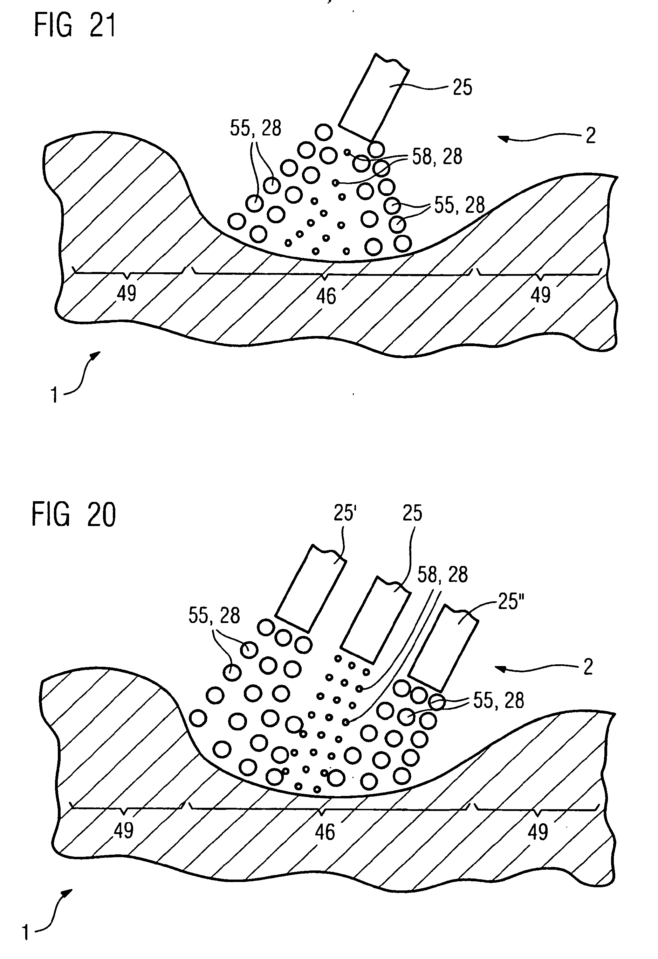

Ebenso kann die Kugelstrahldüse 25 Kugeln 28 kleineren Durchmessers 58 aufweisen, um hohe Intensitäten und hohe Druckeigenspannungen zu erzeugen, und die Kugelstrahldüsen 25', 25'' strahlen mit Kugeln 28 größeren Durchmessers 55, die in den Bereichen 49 geringe Intensitäten und geringere Druckeigenspannungen erzeugen und gleichzeitig in den Bereich 46 hinein, um diesen zu glätten (Fig. 20).
Die Auswahl der Parameter kann den jeweiligen Anforderungen an Höhe der Druckeigenspannungen und Glättung angepasst werden.

Ebenso kann eine einzige Kugelstrahldüse 25 Kugeln verschienen Durchmessers 55, 58 aufweisen und einen bestimmten Bereich, hier die Bereiche 46, 49 gleichzeitig bestrahlen (Fig. 21) .

Unabhängig davon, ob die Kugelstrahldüsen 25, 25', 25'' gleichzeitig oder zeitlich nacheinander betrieben werden, können für jede Kugelstrahldüse 25, 25', 25'' verschiedene Parameter eingestellt werden.

Als Parameter für die Kugelstrahldüse 25, 25', 25'' kann der Strahldruck, die Größe des Strahlmittels 28, das Material des Strahlmittels 28 oder der Auftreffwinkel α ausgewählt werden.
Insbesondere weisen die Kugelstrahldüse 25 und die Kugelstrahldüsen 25', 25'' verschiedene Parameter, insbesondere verschiedene Strahldrücke, auf.

Die Kugelstrahldüsen 25, 25', 25'' können nebeneinander, d.h. wie in Figur 9 angedeutet, auf einer Höhe vorhanden oder hintereinander angeordnet sein (Fig. 10, 11).

Die verschiedenen Parameter für die Kugelstrahldüsen 25, 25', 25'' werden vorgegeben und die Bereiche 46, 49 werden beispielsweise in einem Arbeitsgang überfahren. Das sieht beispielsweise so aus, dass die Kugelstrahldüsen 25, 25', 25'' beispielsweise eine feste Position haben und das Bauteil 1 auf einer beweglichen Unterlage (CNC-Maschine) montiert ist und unter den Kugelstrahldüsen 25, 25', 25'' bewegt wird. Das Bauteil 1 kann auch hin und her bewegt werden, so dass die Bereiche 46, 49 mehrfach bestrahlt werden. Durch diese Vorgehensweise müssen die Bereiche 7, 10, in denen unterschiedliche Druckeigenspannungen erzeugt werden sollen, nicht nacheinander mit Kugelstrahlen beaufschlagt werden. Dies führt zu einem erheblichen Zeitvorteil.
Der Bereich auf der Oberfläche 5 des Bauteils 1, der von einer Kugelstrahldüsen 25, 25', 25' bestrahlt, kann rund oder oval sein, wobei die einzelnen Bereiche aneinander angrenzen.

Figur 9 zeigt eine Aufsicht auf die Bereiche 46 und 49 und die dazu beispielhaft verwendete Anordnung der Kugelstrahldüsen 25, 25' und 25''.
Die Kugelstrahldüsen 25, 25', 25'' sind hier auf gleicher Höhe angeordnet.

Die Kugelstrahldüsen 25, 25', 25'' werden in einer Verfahrrichtung 26 über die Bereiche 46 und 49 verfahren. Dies kann in einem Arbeitsschritt erfolgen, in dem alle drei Düsen 25, 25' und 25'' gleichzeitig betrieben werden, wobei dem Bereich 46 eine höhere Druckeigenspannung σ_{E} durch die Kugelstrahldüse 25 und niedrige Druckeigenspannungen σ_{E} in den angrenzenden Bereichen 49 erzeugt werden.

Die Kugelstrahldüse 25 und die Kugelstrahldüsen 25' und 25'' können auch zeitlich gesehen nacheinander betrieben werden. So kann in einem ersten Verfahrensschritt nur die Kugelstrahldüse 25 betrieben werden, die dann in den Bereich 46 hohe Druckeigenspannungen σ_{E} erzeugt. In einem zweiten oder weiteren Verfahrensschritten wird nicht mehr die Kugelstrahldüse 25 betrieben, sondern die Kugelstrahldüsen 25' und 25'', die in den an den Bereich 46 angrenzende Bereiche 49 niedrigere Druckeigenspannungen σ_{E} erzeugen. Die Düsen 25', 25'' können auch gegenüber der Düse versetzt sein (Fig. 11). Dabei sind die Kugelstrahldüsen beispielsweise auf einen Träger gemeinsam montiert und werden gemeinsam verfahren, auch wenn sie 25, 25', 25" nicht zusammen in Betrieb sind, also kugelstrahlen.

Figur 10 zeigt eine weitere Möglichkeit Druckeigenspannungen σ_{E} in den Bereichen 46 und 49 zu erzeugen.

Die Öffnungen der Kugelstrahldüsen 25' und 25'' sind hier beispielsweise länglich ausgebildet oder ergeben eine längliche Auftrefffläche auf dem Bauteil 1, 120, 130, 342, 354 und überdecken beispielsweise sowohl den Bereich 49 und den angrenzenden Bereich 46. Dieses ist beispielsweise dann gewollt, wenn dadurch eine Glättung des Bereichs 46 erfolgen soll. Die Kugelstrahldüsen 25' und 25'' sind daher in Verfahrrichtung örtlich gesehen gegenüber der Kugelstrahldüse 25 versetzt. Die Kugelstrahldüse 25 ist beispielsweise vorlaufend und die Kugelstrahldüsen 25' und 25'' nachlaufend. Auch hier können die Kugelstrahldüsen 25, 25' und 25'' zeitlich gesehen zusammen oder nacheinander betrieben werden.

So kann die Düse 25 zur Erzeugung von Druckeigenspannungen σ_{E} und die Düsen 25', 25'' zur Glättung verwendet werden.

Dabei sind die Kugelstrahldüsen beispielsweise auf einen Träger gemeinsam montiert und werden gemeinsam verfahren, auch wenn sie 25, 25', 25'' nicht zusammen in Betrieb sind, also kugelstrahlen.

Figur 11 zeigt eine weitere Anordnung von Kugelstrahldüsen. Hier werden fünf Kugelstrahldüsen 25, 25', 25 ", 25 " ' und 25 " " verwendet.
Die Parameter für die einzelnen Kugelstrahldüsen 25 und 25', 25 " sowie 25 " ' und 25 " " können jeweils unterschiedlich sein und den gewünschten Anforderungen angepasst sein.

So können beispielsweise die Düsen 25, 25', 25 " zur Erzeugung von Druckeigenspannungen σ_{E} und beispielsweise die Düsen 25" ', 25 " " zur Glättung verwendet werden.

Die Kugelstrahldüse 25 deckt den Bereich 46 ab, wohingegen die Kugelstrahldüsen 25', 25" nur die jeweils angrenzenden Bereiche 49 abdecken.

Die örtlich gesehen nachfolgenden Kugelstrahldüsen 25"', 25" " dienen zur Glättung und decken hier beispielsweise sowohl den Bereich 46 als auch den Bereich 49 ab. Dabei sind die Kugelstrahldüsen beispielsweise auf einen Träger gemeinsam montiert und werden gemeinsam verfahren, auch wenn sie 25, 25', 25" nicht zusammen in Betrieb sind, also kugelstrahlen.

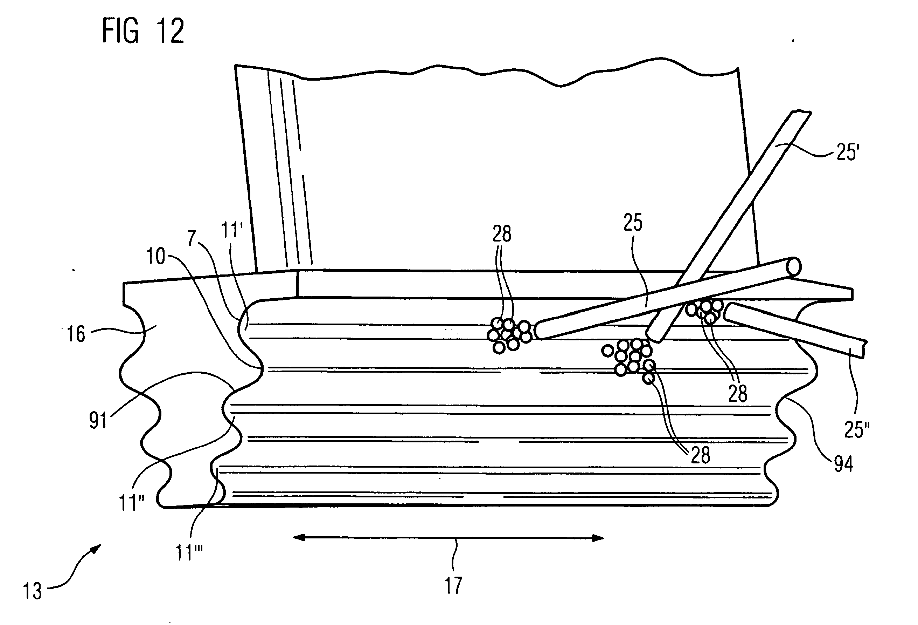

Figur 12 zeigt als Bauteil 1 eine Turbinenschaufel 13 mit ihrem im Befestigungsbereich 16 tannenbaumähnlich ausgebildeten Schaufelfuß 43.
Der Schaufelfuß 43 weist konkav gekrümmte Bereiche 7 auf, in denen hohe Druckeigenspannungen σ_{E} vorhanden sein sollen und weist konvex gekrümmte Bereiche 10 auf, in denen geringere Druckeigenspannungen σ_{E} als im konvex gekrümmten Bereich 7 vorhanden sein sollen.
Der Schaufelfuß 43 weist beispielsweise drei Wellentäler bzw. Rillen 11', 11", 11''' auf, wobei die drei Kugelstrahldüsen 25, 25', 25" beispielsweise bezüglich ihrer Parameter fest gegenüber der ersten Rille 11' eingestellt sind.

Die Turbinenschaufel 13 oder das Bauteil 1 wird entlang einer Richtung 17 gegenüber den Kugelstrahldüsen 25, 25' und 25 " verschoben, so dass die gesamte Rille 11' bestrahlt wird. Dieser Vorgang kann für die weiteren Rillen 11 " und 11 "' wiederholt werden, oder es sind entsprechend für die Rillen 11" und 11''' weitere Kugelstrahldüsen vorhanden, die eine gleichzeitige Bearbeitung aller Rillen ermöglichen.

Figur 13 zeigt schematisch, dass die Kanten der Rillen 11', 11'', 11''' ebenfalls bestrahlt werden, um Druckeigenspannungen σ_{E} zu erzeugen.
Außerdem ist zu erkennen, dass das Bauteil 1 in sich gekrümmt ist.

Figur 14 zeigt den prinzipiellen Verlauf der Druckeigenspannung σ_{E} in einem Bauteil 1, wie er sich durch einen Bestrahlungsvorgang ergibt
In dem Diagramm ist die Druckeigenspannung σ_{E} über der Tiefe d eines Bauteils 1 aufzutragen. Das Maximum 67 der Druckeigenspannung σ_{E} liegt nicht an der Oberfläche 4 des Bauteils 1, d.h. bei d = 0, sondern im Inneren des Bauteils 1 (d > 0). Den Verlauf der Druckeigenspannung σ_{E} zeigt die gestrichelt gezeichnete Kurve 61.

Gewünscht ist jedoch, dass ein maximaler Wert der Druckeigenspannung σ_{E} an der Oberfläche 5 des Bauteils 1 vorhanden ist. Diesen gewünschten Verlauf der Druckeigenspannung σ_{E} zeigt die durchgezogene Linie der Kurve 64.

Der gewünschte Verlauf 64 kann beispielsweise wie folgt erreicht werden.

In einem ersten Arbeitsgang wird ein konkav gekrümmter Bereich 7, 10 mit hohem Strahldruck bestrahlt.
In einem zweiten Arbeitsgang wird derselbe Bereich 7, 10 mit geringerer Intensität bestrahlt, so dass sich das Maximum an die Oberfläche 5 des Bauteils 1 verschiebt. Dies kann jedoch wie oben beschrieben auch in einem Arbeitsgang erfolgen.

So wird erreicht, dass das Maximum der Druckeigenspannung σ_{E} an der Oberfläche 5 oder nahe der Oberfläche 5 vorhanden ist und trotzdem eine hohe Eindringtiefe der Druckeigenspannung σ_{E} in den Bauteil 1 vorhanden ist.

Figur 15 zeigt ein Bauteil 13, das mittels des Verfahrens behandelt werden kann.
Figur 15 zeigt in perspektivischer Ansicht eine Turbinenschaufel 13 beispielsweise für eine Dampfturbine, die sich entlang einer Längsachse 37 erstreckt.
Bei herkömmlichen Turbinenschaufeln 13 werden in allen Bereichen 40, 19, 43 der Laufschaufel 1 massive metallische Werkstoffe verwendet.
Die Turbinenschaufel 13 kann hierbei durch ein Gussverfahren, durch ein Schmiedeverfahren, durch ein Fräsverfahren oder Kombinationen daraus gefertigt sein.
Die Turbinenschaufel 13 weist entlang der Längsachse aufeinander folgend einen Befestigungsbereich 16, eine daran angrenzende Schaufelplattform 19 sowie einen Schaufelblattbereich 40 auf. Im Befestigungsbereich 16 ist ein Schaufelfuß 43 gebildet, der zur Befestigung der Turbinenschaufel 13 an der Scheibe 22 einer nicht dargestellten Strömungsmaschine dient. Der Schaufelfuß 43 ist als Hammerkopf ausgestaltet. Andere Ausgestaltungen, beispielsweise als Tannenbaum- (Fig. 2) oder Schwalbenschwanzfuß sind möglich.
Der Tannenbaumfuß 43 weist sowohl zumindest in einem konkav gekrümmten Bereich 7 und dem sich anschließenden konvex gekrümmten Bereich 10 von null verschiedene Druckeigenspannungen auf, so dass Druckeigenspannungen großflächig auf der Oberfläche des Schaufelfußes, insbesondere überall, vorhanden sind.

Die Figur 16 zeigt beispielhaft eine Gasturbine 100 in einem Längsteilschnitt.
Die Gasturbine 100 weist im Inneren einen um eine Rotationsachse 102 drehgelagerten Rotor 103 auf, der auch als Turbinenläufer bezeichnet wird.
Entlang des Rotors 103 folgen aufeinander ein Ansauggehäuse 104, ein Verdichter 105, eine beispielsweise torusartige Brennkammer 110, insbesondere Ringbrennkammer 106, mit mehreren koaxial angeordneten Brennern 107, eine Turbine 108 und das Abgasgehäuse 109.
Die Ringbrennkammer 106 kommuniziert mit einem beispielsweise ringförmigen Heißgaskanal 111. Dort bilden beispielsweise vier hintereinander geschaltete Turbinenstufen 112 die Turbine 108.
Jede Turbinenstufe 112 ist aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei am Stator 143 befestigt, wohingegen die Laufschaufeln 120 einer Reihe 125 beispielsweise mittels einer Turbinenscheibe 133 am Rotor 103 angebracht sind. An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die.am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt.
Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 106 auskleidenden Hitzeschildsteinen am meisten thermisch belastet.
Um den dort herrschenden Temperaturen standzuhalten, werden diese mittels eines Kühlmittels gekühlt.
Ebenso können die Substrate eine gerichtete Struktur aufweisen, d.h. sie einkristallin (SX-Struktur) oder weisen nur längsgerichtete Körner auf (DS-Struktur).
Als Material werden Eisen-, Nickel- oder Kobaltbasierte Superlegierungen verwendet.
Ebenso können die Schaufeln 120, 130 Beschichtungen gegen Korrosion (MCrA1X; M ist zumindest ein Element der Gruppe Eisen (Fe), Kobalt (Co), Nickel (Ni), X steht für Yttrium (Y) und/oder zumindest ein Element der Seltenen Erden) und Wärme durch eine Wärmedämmschicht aufweisen. Die Wärmedämmschicht besteht beispielsweise ZrO₂, Y₂O₄-ZrO₂, d.h. sie ist nicht, teilweise oder vollständig stabilisiert durch Yttriumoxid und/oder Kalziumoxid und/oder Magnesiumoxid.
Durch geeignete Beschichtungsverfahren wie z.B. Elektronenstrahlverdampfen (EB-PVD) werden stängelförmige Körner in der Wärmedämmschicht erzeugt.

Die Leitschaufel 130 weist einen dem Innengehäuse 138 der Turbine 108 zugewandten Leitschaufelfuß (hier nicht dargestellt) und einen dem Leitschaufelfuß gegenüberliegendem Leitschaufelkopf auf. Der Leitschaufelkopf ist dem Rotor 103 zugewandt und an einem Befestigungsring 140 des Stators 143 festgelegt.

In Figur 17 ist beispielhaft eine Dampfturbine 300, 303 mit einer sich entlang einer Rotationsachse 306 erstreckenden Turbinenwelle 309 dargestellt.

Die Dampfturbine weist eine Hochdruck-Teilturbine 300 und eine Mitteldruck-Teilturbine 303 mit jeweils einem Innengehäuse 312 und einem dieses umschließende Außengehäuse 315 auf.
Die Hochdruck-Teilturbine 300 ist beispielsweise in Topfbauart ausgeführt.
Die Mitteldruck-Teilturbine 303 ist zweiflutig ausgeführt.
Es ist ebenfalls möglich, dass die Mitteldruck-Teilturbine 303 einflutig ausgeführt ist.
Entlang der Rotationsachse 306 ist zwischen der Hochdruck-Teilturbine 300 und der Mitteldruck-Teilturbine 303 ein Lager 318 angeordnet, wobei die Turbinenwelle 309 in dem Lager 318 einen Lagerbereich 321 aufweist. Die Turbinenwelle 309 ist auf einem weiteren Lager 324 neben der Hochdruck-Teilturbine 300 aufgelagert. Im Bereich dieses Lagers 324 weist die Hochdruck-Teilturbine 300 eine Wellendichtung 345 auf. Die Turbinenwelle 309 ist gegenüber dem Außengehäuse 315 der Mitteldruck-Teilturbine 303 durch zwei weitere Wellendichtungen 345 abgedichtet. Zwischen einem Hochdruck-Dampfeinströmbereich 348 und einem Dampfaustrittsbereich 351 weist die Turbinenwelle 309 in der Hochdruck-Teilturbine 300 die Hochdruck-Laufbeschaufelung 354, 357 auf. Diese Hochdruck-Laufbeschaufelung 354, 357 stellt mit den zugehörigen, nicht näher dargestellten Laufschaufeln einen ersten Beschaufelungsbereich 360 dar. Die Mitteldruck-Teilturbine 303 weist einen zentralen Dampfeinströmbereich 333 auf. Dem Dampfeinströmbereich 333 zugeordnet weist die Turbinenwelle 309 eine radialsymmetrische Wellenabschirmung 363, eine Abdeckplatte, einerseits zur Teilung des Dampfstromes in die beiden Fluten der Mitteldruck-Teilturbine 303 sowie zur Verhinderung eines direkten Kontaktes des heißen Dampfes mit der Turbinenwelle 309 auf. Die Turbinenwelle 309 weist in der Mitteldruck-Teilturbine 303 einen zweiten Beschaufelungsbereich 366 mit den Mitteldruck-Laufschaufeln 354, 342 auf. Der durch den zweiten Beschaufelungsbereich 366 strömende heiße Dampf strömt aus der Mitteldruck-Teilturbine 303 aus einem Abströmstutzen 369 zu einer strömungstechnisch nachgeschalteten, nicht dargestellten Niederdruck-Teilturbine.

Die Turbinenwelle 309 ist beispielsweise aus zwei Teilturbinenwellen 309a und 309b zusammengesetzt, die im Bereich des Lagers 318 fest miteinander verbunden sind.

## Patentansprüche

1. Turbinenschaufel (120, 130, 342, 354),
die in einem Befestigungsbereich (16) oder
Schaufelfuß (43) einen gekrümmten Oberflächenbereich (4) in Form eines Tannenbaums aufweist,
wobei der Oberflächenbereich (4) aus
zumindest einem konkav gekrümmten Bereich (7, 11) und zumindest einem konvex gekrümmten Bereich (10, 12) besteht, die aneinander angrenzen,
**dadurch gekennzeichnet,**
**dass** der konkav gekrümmte Bereich (7, 11) durch Kugelbestrahlung von Null verschiedene Druckeigenspannungen (σ_{E}) aufweist,
**dass** der konvex gekrümmte Bereich (10, 12) durch Kugelbestrahlung von Null verschiedene Druckeigenspannungen (σ_{E}) aufweist,
**dass** der konkav gekrümmte Bereich (7, 11) höhere Druckeigenspannungen (σ_{E}) aufweist als der konvex gekrümmte Bereich (10, 12),
die Höhe der Druckeigenspannung (σ_{E}) in dem konkav gekrümmten Bereich (7, 11) mindestens 30%,
insbesondere 50% der Streckgrenze (Rₚ),
insbesondere der Streckgrenze (Rₚ 0,2),
des Materials des Bauteils (1, 13, 120, 130, 342, 354) beträgt und
**dass** der gesamte Oberflächenbereich (4) Druckeigenspannungen (σ_{E}) aufweist.

2. Bauteil nach Anspruch 1,
**dadurch gekennzeichnet, dass**
dass der konkav gekrümmte Bereich (7, 11) im Minimum (7') einen Krümmungsradius (R) aufweist und
dass der konkav gekrümmte Bereich (7, 11) zumindest eine Breite (81) des drei bis fünffachen des Krümmungsradius (R) aufweist.

3. Bauteil nach Anspruch 1,
**dadurch gekennzeichnet, dass**
die Druckeigenspannung (σ_{E}) mindestens 60% der Streckgrenze (Rₚ),
insbesondere der Streckgrenze (Rₚ 0,2),
des Materials des Bauteils (1, 13, 120, 130, 342, 354) beträgt.

4. Bauteil nach Anspruch 1,
**dadurch gekennzeichnet, dass**
die Druckeigenspannung (σ_{E}) im konkav gekrümmten Bereich (7, 11) um mindestens 50%,
insbesondere um 75% höher als im konvex gekrümmten Bereich (10, 12) mit den niedrigeren Druckeigenspannungen (σ_{E}) ist.

5. Bauteil nach Anspruch 1 bis 4,
**dadurch gekennzeichnet,**
**dass** zumindest ein Bereich (7, 10) eine laterale Verteilung der Höhe der Druckeigenspannungen (σ_{E}) mit zumindest einem Maximum (70, 73) und/oder einem Plateau (74) aufweist, und dass das Maximum (70) des konkav gekrümmten Bereichs (7) höher ist als das Maximum (73) oder das Plateau (74) des konvex gekrümmten Bereichs (10).

6. Bauteil nach Anspruch 1 bis 5,
**dadurch gekennzeichnet, dass**
das Bauteil (1) ein Bauteil einer Dampf- (300, 303) oder Gasturbine (100) ist,
insbesondere eine Turbinenschaufel (120, 130, 342, 354).

## Claims

1. Turbine blade or vane (120, 130, 342, 354), which in a securing region (16)or blade or vane root (43) has a curved surface region (4) which is in the shape of a fir tree, wherein the surface region (4) comprise is
at least one concavely curved region (7, 11) and
at least one convexly curved region (10, 12),
which adjoin one another,
**characterized**
**in that** the concavely curved region (7, 11) has compressive residual stresses (σ_{E}) by shot-peening treatment that are different than zero, in that the convexly curved region (10, 12) has compressive residual stresses (σ_{E}) by shot-peening treatment that are different than zero,
**in that** the concavely curved region (7, 11) has higher compressive residual stresses (σ_{E}) than the convexly curved region (10, 12),
the level of the compressive residual stress (σ_{E}) in the concavely curved region (7, 11) amounts to at least 30%, in particular 50% of the yield strength (Rₚ),
in particular of the yield strength (Rₚ 0.2),
of the material of the component (1, 13, 120, 130, 342, 354), and, in that the entire surface region (4) has compressive residual stresses (σ_{E})

2. Component according to Claim 1,
**characterized**
**in that** the concavely curved region (7, 11) at the minimum (7') has a radius of curvature (R), and
**in that** the concavely curved region (7, 11) has at least one width (81) of three to five times the radius of curvature (R).

3. Component according to Claim 1,
**characterized in that**
the compressive residual stress (σ_{E}) amounts to at least 60% of the yield strength (Rₚ),
in particular of the yield strength (Rₚ 0.2),
of the material of the component (1, 13, 120, 130, 342, 354).

4. Component according to Claim 1,
**characterized in that**
the compressive residual stress (σ_{E}) in the concavely curved region (7, 11) is at least 50%,
in particular 75% higher than in the convexly curved region (10, 12) having the lower compressive residual stress (σ_{E}).

5. Component according to Claims 1 to 4,
**characterized**
**in that** at least one region (7, 10) has a lateral distribution of the level of the compressive residual stresses (σ_{E}) with at least one maximum (70, 73) and/or a plateau (74), and
**in that** the maximum (70) of the concavely curved region (7) is higher than the maximum (73) or the plateau (74) of the convexly curved region (10).

6. Component according to Claims 1 to 5,
**characterized in that**
the component (1) is a component of a steam turbine (300, 303) or gas turbine (100),
in particular a turbine blade or vane (120, 130, 342, 354).

## Revendications

1. Aube (120, 130, 342, 354) de turbine,
qui comporte, dans une partie (16) de fixation ou dans une emplanture (43) d'aube, une partie (4) de surface courbée sous la forme d'un sapin,
dans laquelle la partie (4) de surface est constituée d'au moins une partie (7, 11) concave et d'au moins une partie (10, 12) convexe, qui sont voisines l'une de l'autre, **caractérisée**
**en ce que** la partie (7, 11) concave a des tensions (σ_{E}) propres de compression différentes de zéro par exposition à des billes,
**en ce que** la partie (10, 12) convexe a des contraintes (σ_{E}) propres de compression différentes de zéro par exposition à des billes,
**en ce que** la partie (7, 11) concave a des contraintes (σ_{E}) propres de compression plus grande que celle de la partie (10, 12) convexe,
le niveau de la contrainte (σ_{E}) propre de compression dans la partie (7, 11) concave représente au moins 30%, notamment 50% de la limite d'allongement (Rp),
notamment de la limite d'allongement (Rp, 0,2),
du matériau de l'élément (1, 13, 120, 130, 342, 354) et en ce que toute la partie (4) de surface a des contraintes (σ_{E}) propres de compression.

2. Elément suivant la revendication 1,
**caractérisé en ce que**
la partie (7, 11) concave a au minimum (7') un rayon R de courbure et
**en ce que** la partie (7, 11) concave a au moins une largeur (81) allant du triple au quintuple du rayon R de courbure.

3. Elément suivant la revendication 1,
**caractérisé en ce que**
la contrainte (σ_{E}) de compression représente au moins 60% de la limite d'étirage (Rp),
notamment de la limite d'étirage (Rp, 0,2),
du matériau de l'élément (1, 13, 120, 130, 342, 354).

4. Elément suivant la revendication 1,
**caractérisé en ce que**
la contrainte (σ_{E}) propre de compression dans la partie (7, 11) concave est plus grande d'au moins 50%,
notamment de 75% que dans la partie (10, 12) convexe ayant les contraintes (σ_{E}) propres de compression les plus petites.

5. Elément suivant la revendication 1 à 4,
**caractérisé**
**en ce qu'**au moins une partie (7, 10) a une répartition latérale du niveau des contraintes (σ_{E}) propres de compression ayant au moins un maximum (70, 73) et/ou un plateau (74) et en ce que le maximum (70) de la partie (7) concave est plus grand que le maximum (73) ou le plateau (74) de la partie (10) convexe.

6. Elément suivant la revendication 1 à 5,
**caractérisé en ce que**
l'élément (1) est un élément d'une turbine à vapeur (300, 303) ou d'une turbine (100) à gaz,
notamment d'une aube (120, 130, 342, 354) de turbine.
